# EUROPEAN PATENT APPLICATION

(11) **EP 4 307 167 A1**
(43) Date of publication of application: **17.01.2024**
(21) Application number: 21936793.5
(22) Date of filing: 24.11.2021
(51) Int. Cl.: G06K 9/00

(54) **METHOD FOR IDENTIFYING ARTICLE INFORMATION IN REFRIGERATOR, AND REFRIGERATOR AND COMPUTER STORAGE MEDIUM**

(30) Priority: 16.04.2021 CN 202110412308
(71) Applicant: Qingdao Haier Refrigerator Co., Ltd, Qingdao, Shandong 266101 (CN); Haier Smart Home Co., Ltd., Qingdao, Shandong 266101 (CN)
(72) Inventor: GAO, Hongbo, Qingdao, Shandong 266101 (CN)
(74) Representative: Gille Hrabal Partnerschaftsgesellschaft mbB Patentanwälte
(86) International application number: PCT/CN2021/132848
(87) International publication number: WO 2022/217927

(57) **Abstract**

The present invention provides a method for marking information of items in a refrigerator, the refrigerator and a computer storage medium; the method for marking information of items in a refrigerator includes the following steps: obtaining an aerial view of the items stored in the refrigerator; detecting and identifying edge contours of different parts of the item in the aerial view to obtain at least one closed-loop contour line matched with the corresponding edge contours; and searching the closed-loop contour line corresponding to a central region of a top surface of the item, and marking the corresponding item information at a central position in the closed-loop contour line. With the method for marking information of items in a refrigerator, the item information which is not marked at the central position of the top surface of the item due to a shooting angle can be subjected to position correction, different correction algorithms are adopted according to different item outer package shapes, identification accuracy is high, and a speed is high.

## Description

### TECHNICAL FIELD

The present invention relates to the field of refrigerating apparatuses, and in particular, to a method for marking information of items in a refrigerator, the refrigerator and a computer storage medium.

### BACKGROUND

With a development of intelligentization of household appliances, identification of internal items becomes a necessary function of an intelligent refrigerator. Usually, in order to identify the items stored in the refrigerator, one or more cameras are mounted in an internal storage space of the refrigerator for photographing the items stored in the refrigerator, and after a shot picture is processed, an identification result is generated and sent to a use terminal for a user to view. The arrangement of the camera above the items may avoid a problem of mutual shielding of the items, so as to improve accuracy of item information identification.

However, when an image of the items is taken from the top, the items on the image located on both sides of a viewing range of the camera have a large perspective relationship due to a shooting angle. In a traditional detection method, detected and identified item information is marked at a central position of a single item on the image, and at this point, the item information cannot be marked at an actual central position of the item, such that a user has a poor impression on a use terminal.

### SUMMARY

An object of the present invention is to provide a method for marking information of items in a refrigerator, the refrigerator and a computer storage medium.

The present invention provides a method for marking information of items in a refrigerator, including the following steps:
obtaining an aerial view of the items stored in the refrigerator;
detecting and identifying edge contours of different parts of the item in the aerial view to obtain at least one closed-loop contour line matched with the corresponding edge contours; and
searching the closed-loop contour line corresponding to a central region of a top surface of the item, and marking the corresponding item information at a central position in the closed-loop contour line.

As a further improvement of the present invention, after the obtaining an aerial view of the items stored in the refrigerator, the method further includes:
dividing a plurality of detection frame regions in the aerial view, each detection frame region corresponding to one item; and
detecting and identifying the edge contours of different parts of the item in the detection frame region.

As a further improvement of the present invention, the searching the closed-loop contour line corresponding to a central region of a top surface of the item specifically includes:
detecting and identifying a type of an outer contour of the item; and
selecting the closed-loop contour line corresponding to the central region of the top surface of the item according to the type of the outer contour of the item.

As a further improvement of the present invention, the detecting and identifying a type of an outer contour of the item specifically includes:
determining the type of the outer contour of the item according to a shape of the closed-loop contour line of the item, the items being classified into bottled items, canned items, boxed items and other items, the bottled item having a plurality of circular or oval closed-loop contour lines, the canned item having one circular or oval closed-loop contour line, and the boxed item having one or more quadrangle-like closed-loop contour line.

As a further improvement of the present invention, the selecting the closed-loop contour line corresponding to the central region of the top surface of the item according to the type of the outer contour of the item specifically includes:
determining that the item is a bottled item;
detecting and identifying the circular or oval closed-loop contour line in the detection frame region corresponding to the bottled item, and calculating a number of pixels in the closed-loop contour line; and
selecting a closed-loop contour line with the minimum number of internal pixels as the closed-loop contour line corresponding to a bottle cap region of the bottled item, and marking the item information at the central position in the closed-loop contour line.

As a further improvement of the present invention, the selecting the closed-loop contour line corresponding to the central region of the top surface of the item according to the type of the outer contour of the item specifically includes:
determining that the item is a canned item; and
detecting and identifying the circular or oval closed-loop contour line in the detection frame region corresponding to the canned item, and marking the corresponding item information at the central position in the closed-loop contour line.

As a further improvement of the present invention, the selecting the closed-loop contour line corresponding to the central region of the top surface of the item according to the type of the outer contour of the item specifically includes:
determining that the item is a boxed item;
detecting and identifying the quadrangle-like closed-loop contour line in the detection frame region corresponding to the boxed item, and calculating a number of pixels in the closed-loop contour line; and
selecting a closed-loop contour line with the maximum number of internal pixels as the closed-loop contour line corresponding to a central region of a top surface of the boxed item, and marking the corresponding item information at the central position in the closed-loop contour line.

As a further improvement of the present invention, the selecting the closed-loop contour line corresponding to the central region of the top surface of the item according to the type of the outer contour of the item specifically includes:
determining that the item belongs to other items; and
marking the corresponding item information at a central position of the detection frame region of the item.

The present invention further provides a refrigerator, including: a plurality of bottle seats, a camera, a memory and a processor, wherein the camera is provided above the bottle seats and is vertically downward;
the memory stores a computer program executable on the processor, and the processor executes the program to implement the steps of the method for marking information of items in a refrigerator.

The present invention further provides a computer storage medium, having a computer program stored therein, when the computer program runs, a device where the computer storage medium is located executing the steps of the method for marking information of items in a refrigerator.

The present invention has the following beneficial effects: the edge contours of different parts of the item in the item image are identified, the edge contour corresponding to the central region of the item is matched and identified, and the item information is marked in the edge contour, such that the item information which is not marked at the central position of the top surface of the item due to a shooting angle can be subjected to position correction, different correction algorithms are adopted according to different item outer package shapes, identification accuracy is high, and a speed is high.

### BRIEF DESCRIPTION OF THE DRAWINGS

FIG. 1 is a schematic flow chart of a method for marking information of items in a refrigerator according to an embodiment of the present invention.
FIG. 2 is a schematic diagram of a taken aerial view in the embodiment of the present invention.
FIG. 3 is a schematic flow chart of a method for detecting a closed-loop contour line corresponding to a central region of a top surface of a bottled item in the embodiment.
FIGS. 4 and 5 are schematic diagrams of a conventional marking position and a marking position in the present invention of information of the bottled item respectively.
FIG. 6 is a schematic flow chart of a method for detecting a closed-loop contour line corresponding to a central region of a top surface of a canned item in the embodiment.
FIGS. 7 and 8 are schematic diagrams of a conventional marking position and a marking position in the present invention of information of the canned item respectively.
FIG. 9 is a schematic flow chart of a method for detecting a closed-loop contour line corresponding to a central region of a top surface of a boxed item in the embodiment.
FIGS. 10 and 11 are schematic diagrams of a conventional marking position and a marking position in the present invention of information of the boxed item respectively.

### DETAILED DESCRIPTION

In order to make the objects, technical solutions and advantages of the present application more apparent, the technical solutions of the present application will be clearly and completely described below with reference to the specific embodiments of the present application and the corresponding accompanying drawings. Obviously, the described embodiments are merely some embodiments of the present application, and not all embodiments. All other embodiments obtained by a person of ordinary skill in the art based on the embodiments of the present application without creative efforts shall fall within the protection scope of the present application.

The embodiments of the present invention are described in detail below, and examples thereof are illustrated in the accompanying drawings, wherein the same or similar reference numerals refer to the same or similar elements or elements having the same or similar functions throughout. The embodiments described below with reference to the accompanying drawings are illustrative only for the purpose of explaining the present invention and are not to be construed as limiting the present invention.

For convenience of explanation, terms indicating relative spatial positions, such as "upper", "lower", "rear", "front", or the like, are used herein to describe the relationship of one unit or feature relative to another unit or feature illustrated in the drawings. Terms expressive of the spatial relative positions may include different orientations of the device in use or operation other than the orientations shown in the drawings. For example, when the apparatus in the drawings is turned over, the units which are described to be located "below" or "above" other units or features are located "above" or "below" other units or features. Therefore, the exemplary term "below" may include both the "below" and "above" spatial orientations.

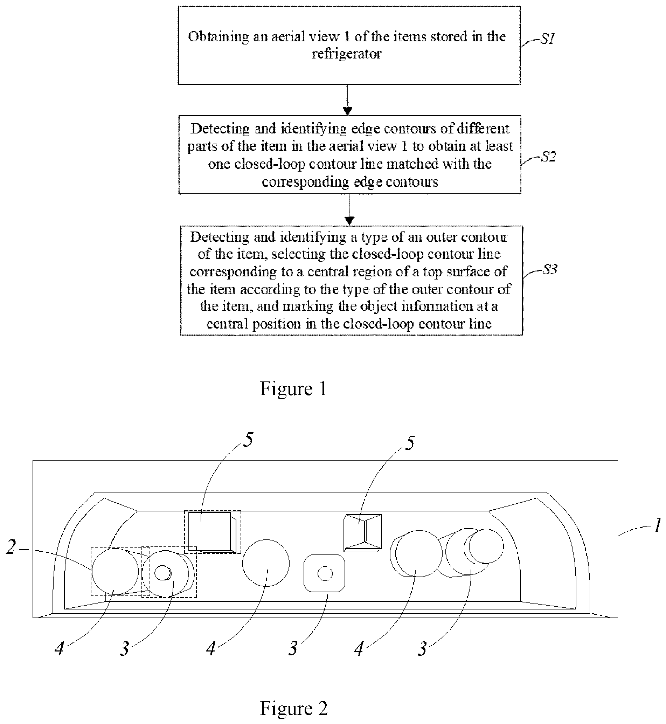

As shown in FIG. 1, the present invention provides a method for marking information of items in a refrigerator, including the following steps:
S 1: obtaining an aerial view 1 of the items stored in the refrigerator.

The aerial view 1 is obtained by photographing the items from the top, thus avoiding a situation that mutual shielding between inner structures of the refrigerator and the items is unfavorable for detection and identification of the item information; however, when the image is shot from the top, due to a shooting angle, the items at edges present a certain perspective relationship in the aerial view 1, such that an actual top surface central position of the item and a central position of the item on the image have a deviation; usually, a food material information marking position is located in the central position of the item on the image, and at this point, the item information marking position is required to be corrected to make the information marking position located at the actual top surface central position of the item, so as to improve use experiences of a user after the image is transmitted to a terminal device.

In the present embodiment, a camera is provided above a bottle seat, is vertically downward, and is configured to shoot the information of the item in the bottle seat below the camera. In other embodiments, the camera may be provided in other storage spaces in the refrigerator, such as a freezing chamber or a refrigerating chamber.

Exemplarily, FIG. 2 shows a schematic diagram of the taken aerial view 1 in the present embodiment.

S2: detecting and identifying edge contours of different parts of the item in the aerial view 1 to obtain at least one closed-loop contour line matched with the corresponding edge contours.

Exemplarily, in the present embodiment, since the camera is provided above the bottle seat, the photographed items are usually yogurt, beverages, or the like, and regions, such as top surfaces, side surfaces, bottle caps, or the like, of the items usually have obvious pixel grayscale differences in the image, such that obvious edge contour lines can be detected and identified.

Specifically, the contour lines of different regions of each item in the aerial view 1 can be identified through a conventional edge detection algorithm, such as a Canny edge detection algorithm, and specific algorithm steps belong to the prior art and are not repeated herein.

Further, in some embodiments of the present invention, before step S2, the method further includes the following steps:
identifying the items present in the aerial view 1, and dividing a plurality of detection frame regions 2 in the aerial view 1, each detection frame region 2 corresponding to one item; and
detecting and identifying edge contours of different parts of the item in the detection frame region 2.

Exemplarily, as shown in the drawing, the detection frame region 2 of a single item information identification region is obtained, the detection frame region 2 may be in any shape, one item exists in each detection frame region 2 as a detection object target, and subsequent edge detection in the detection frame region 2 may increase a calculation speed and identification accuracy.

S3: detecting and identifying a type of an outer contour of the item, selecting the closed-loop contour line corresponding to a central region of a top surface of the item according to the type of the outer contour of the item, and marking the object information at a central position in the closed-loop contour line.

Exemplarily, in the present embodiment, the items may be classified into bottled items 3, canned items 4, boxed items 5 and other items, the bottled item 3 has a bottle cap and is an item with an obvious bottle cap, such as a bottled beverage, or the like; the canned item 4 has a circular outer contour in a top view and is an item with a substantially cylindrical outer package, such as a canned beverage, a seasoning sauce, or the like; the boxed item 5 is in a quadrangle-like shape in a top view, and is an item with a substantially rectangular-parallelepiped or cubic outer package, such as a boxed dairy product, or the like; items not belonging to the above three categories are classified as other items.

Specifically, there exist a plurality of different methods for classifying the items, and in a first embodiment, the method includes the following steps:
S31a: identifying the type of the outer contour of the item according to the detected closed-loop contour line of the item, the items being classified into bottled items 3, canned items 4, boxed items 5 and other items according to shapes of the closed-loop contour lines, the bottled item 3 having a plurality of circular or oval closed-loop contour lines, the canned item 4 having one circular or oval closed-loop contour line, the boxed item 5 having a quadrangle-like closed-loop contour line, and the items not belonging to the above item categories being classified as other items.

With the method, the item information is not required to be identified, thus avoiding a condition that the item information is identified incorrectly to cause incorrect classification.

In a second embodiment, the method includes the following steps:
S31b: identifying and detecting the item information with a YOLO algorithm, an SSD algorithm, a traditional detection algorithm, or the like, identifying item category information with a deep learning algorithm according to an item top surface image, and correspondingly classifying the items into bottled items 3, canned items 4, boxed items 5 and other items according to the category information based on a corresponding relationship between item categories and different types of outer contours stored in a database.

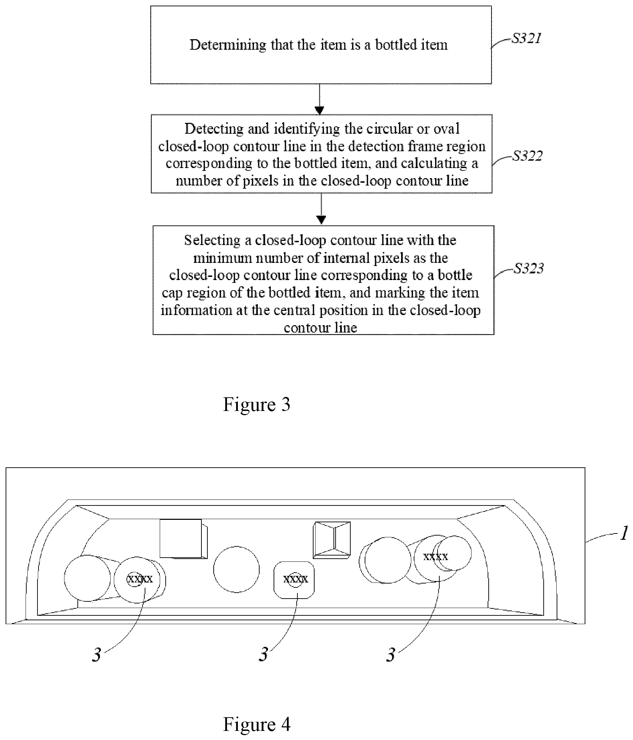

Further, as shown in FIG. 3, the detecting the closed-loop contour line corresponding to a central region of a top surface of the item according to the type of the outer contour of the item specifically includes the following steps:
S321: determining that the item is a bottled item 3.
S322: detecting and identifying the circular or oval closed-loop contour line in the detection frame region corresponding to the bottled item 3, and calculating a number of pixels in the closed-loop contour line.
S323: selecting a closed-loop contour line with the minimum number of internal pixels as the closed-loop contour line corresponding to a bottle cap region of the bottled item 3, and marking the item information at the central position in the closed-loop contour line.

Usually, the bottle cap of the bottled item 3 is circular, is provided in the central region of the item, and can be used as a reference position for marking the item information. The circular bottle cap is oval after photographed due to the perspective relationship, and an area of a bottle cap region is usually less than an area of a cross section of a bottle body part in the bottled item, such that the region corresponding to the bottle cap of the bottled item 3 can be obtained by calculating the circular or oval closed-loop contour line with the minimum number of pixels. Only the oval or circular closed-loop contour line is identified, such that regions, such as a half-moon-shaped side wall of the bottle cap in the aerial view 1, can be filtered out, thus avoiding false judgment caused by identifying the region as the region with the minimum number of pixels.

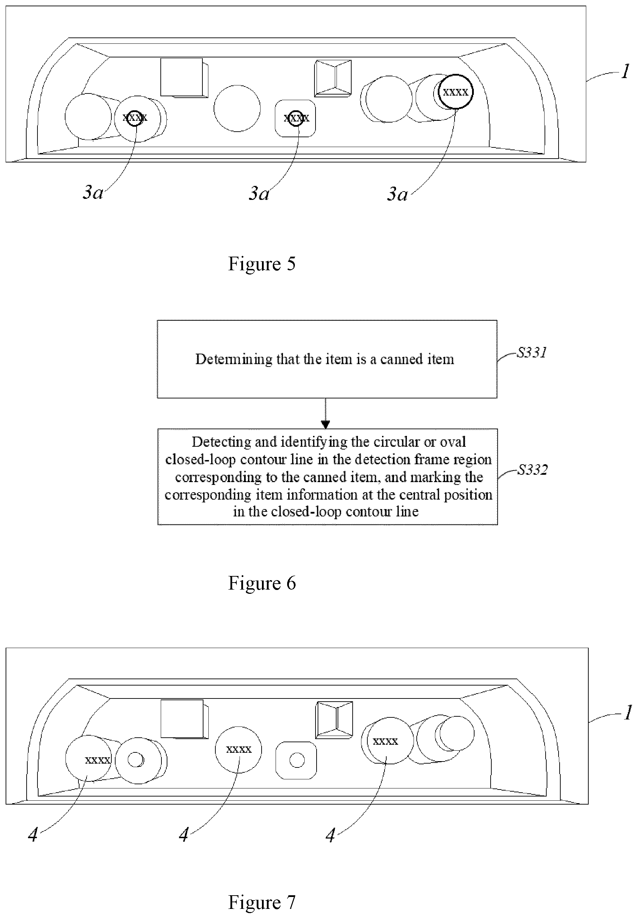

Exemplarily, FIG. 4 shows a position of the item information in the view when the item information marking position is not corrected. As shown in FIG. 5, the closed-loop contour line 3a is the region corresponding to the bottle cap, and after correction, the item information is corrected to be located in the central region of the bottle cap.

In addition, when surfaces of the bottle caps of some items have circular patterns, since the bottle cap region is relatively small, a position of the circular pattern and the information marking position are overlapped highly, and an influence of the pattern in the bottle cap on the information marking position is negligible.

As shown in FIG. 6, the detecting the closed-loop contour line corresponding to a central region of a top surface of the item specifically further includes the following steps:
S331: determining that the item is a canned item 4.
S332: detecting and identifying the circular or oval closed-loop contour line in the detection frame region corresponding to the canned item 4, and marking the corresponding item information at the central position in the closed-loop contour line.

Usually, in the canned item 4, an influence of the bottle cap on a shape of the top surface of the item does not exist, and the region corresponding to the top surface of the item can be found by directly detecting the circular or oval closed-loop contour line, so as to directly mark the item information.

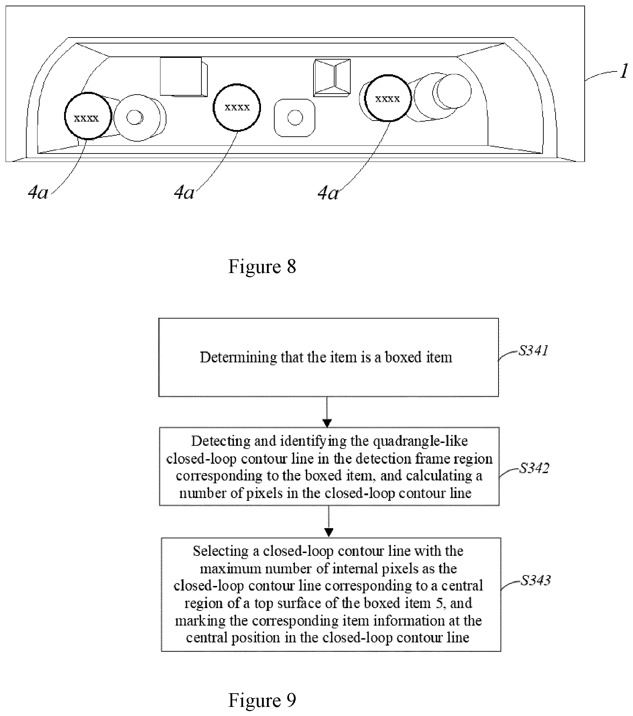

Exemplarily, FIG. 7 shows a position of the item information in the view when the item information marking position is not corrected. As shown in FIG. 8, the closed-loop contour line 4a is the region corresponding to the top surface of the canned item 4, and after correction, the item information is corrected to be located in the central region of the top surface of the item.

As shown in FIG. 9, the detecting the closed-loop contour line corresponding to a central region of a top surface of the item specifically further includes the following steps:
S341: determining that the item is a boxed item 5.
S342: detecting and identifying the quadrangle-like closed-loop contour line in the detection frame region corresponding to the boxed item, and calculating a number of pixels in the closed-loop contour line.
S343: selecting a closed-loop contour line with the maximum number of internal pixels as the closed-loop contour line corresponding to a central region of a top surface of the boxed item 5, and marking the corresponding item information at the central position in the closed-loop contour line.

The boxed item 5 mainly includes a beverage product with an outer package shape similar to a standard rectangular parallelepiped, a dairy product with a rectangular-parallelepiped box body and a wedge-shaped top end surface, a yogurt product with a square cover plate as a top surface, or the like, and when the boxed item 5 is photographed from the top, a top end surface thereof has a shape similar to a quadrangle or a rounded quadrangle due to the perspective relationship. A position of the top end surface of the boxed item 5 can be obtained by detecting and identifying the outer contour, and selection of the closed-loop contour line with the most pixels may prevent a side region of the boxed item 5, an inclined region of the dairy product package with a wedge-shaped top end surface, and other parts from being identified as the central region.

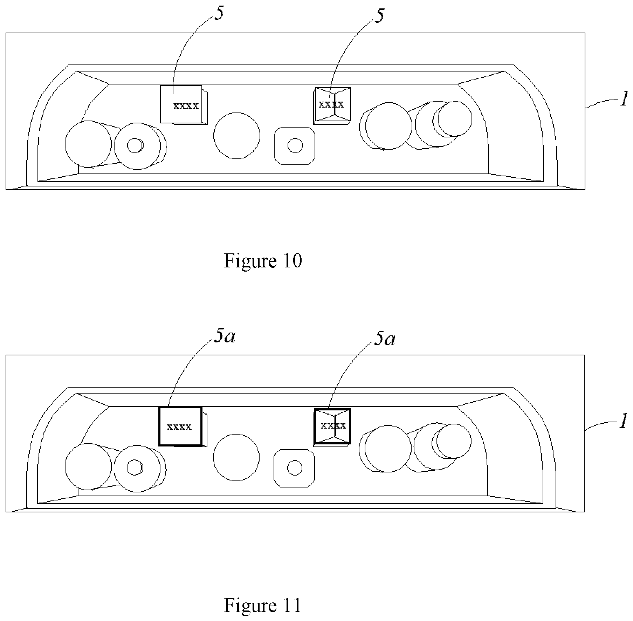

Exemplarily, FIG. 10 shows a position of the item information in the view when the item information marking position is not corrected. As shown in FIG. 11, the closed-loop contour line 4a is the region corresponding to the top surface of the boxed item 5, and after correction, the item information is corrected to be located in the central region of the top surface of the item.

The detecting the closed-loop contour line corresponding to a central region of a top surface of the item specifically further includes the following steps:
S3 51: determining that the item belongs to other items.
S3 52: marking the item information at a central position of the detection frame region of the item.

In the present embodiment, the other items in the bottle seats of the refrigerator usually have non-regular shapes, such as eggs, vegetables, fruits, or the like, and since the item does not have the central position of the top end surface with a remarkable contour line, the item information marking position is not required to be corrected, such that detection and judgment logic is simplified.

In conclusion, with the method for marking information of items in a refrigerator, the item information which is not marked at the central position of the top surface of the item due to the shooting angle can be subjected to position correction, different correction algorithms are adopted according to different item outer package shapes, identification accuracy is high, and a speed is high.

The present invention further provides a refrigerator, including: a plurality of bottle seats, a camera, a memory and a processor, wherein the camera is provided above the bottle seats and is vertically downward. The memory stores a computer program executable on the processor, and the processor executes the program to implement the steps of the method for marking information of items in a refrigerator.

The present invention further provides a computer storage medium, having a computer program stored therein, when the computer program runs, a device where the computer storage medium is located executing the steps of the method for marking information of items in a refrigerator.

It should be understood that although the present specification is described based on embodiments, not every embodiment contains only one independent technical solution. Such a narration way of the present specification is only for the sake of clarity. Those skilled in the art should take the present specification as an entirety. The technical solutions in the respective embodiments may be combined properly to form other embodiments which may be understood by those skilled in the art.

A series of the detailed descriptions set forth above is merely specific description of feasible embodiments of the present invention, and is not intended to limit the protection scope of the present invention. Equivalent embodiments or modifications made within the spirit of the present invention shall fall within the protection scope of the present invention.

It should be understood that although the present specification is described based on embodiments, not every embodiment contains only one independent technical solution. Such a narration way of the present specification is only for the sake of clarity. Those skilled in the art should take the present specification as an entirety. The technical solutions in the respective embodiments may be combined properly to form other embodiments which may be understood by those skilled in the art.

A series of the detailed descriptions set forth above is merely specific description of feasible embodiments of the present invention, and is not intended to limit the protection scope of the present invention. Equivalent embodiments or modifications made within the spirit of the present invention shall fall within the protection scope of the present invention.

### Reference numerals

FIG. 1
S 1: obtaining an aerial view of the items stored in the refrigerator
S2: detecting and identifying edge contours of different parts of the item in the aerial view to obtain at least one closed-loop contour line matched with the corresponding edge contours
S3: searching the closed-loop contour line corresponding to a central region of a top surface of the item, and marking the corresponding item information at a central position in the closed-loop contour line

FIG. 3
S321: determining that the item is a bottled item
S322: detecting and identifying the circular or oval closed-loop contour line in the detection frame region corresponding to the bottled item, and calculating a number of pixels in the closed-loop contour line
S323: selecting a closed-loop contour line with the minimum number of internal pixels as the closed-loop contour line corresponding to a bottle cap region of the bottled item, and marking the item information at the central position in the closed-loop contour line

FIG. 6
S331: determining that the item is a canned item
S332: detecting and identifying the circular or oval closed-loop contour line in the detection frame region corresponding to the canned item, and marking the corresponding item information at the central position in the closed-loop contour line

FIG. 9
S341: determining that the item is a boxed item
S342: detecting and identifying the quadrangle-like closed-loop contour line in the detection frame region corresponding to the boxed item, and calculating a number of pixels in the closed-loop contour line
S343: selecting a closed-loop contour line with the maximum number of internal pixels as the closed-loop contour line corresponding to a central region of a top surface of the boxed item, and marking the corresponding item information at the central position in the closed-loop contour line

## Claims

1. A method for marking information of items in a refrigerator, comprising the following steps:
obtaining an aerial view of the items stored in the refrigerator;
detecting and identifying edge contours of different parts of the item in the aerial view to obtain at least one closed-loop contour line matched with the corresponding edge contours; and
searching the closed-loop contour line corresponding to a central region of a top surface of the item, and marking the corresponding item information at a central position in the closed-loop contour line.

2. The method for marking information of items in a refrigerator according to claim 1, after the obtaining an aerial view of the items stored in the refrigerator, further comprising:
dividing a plurality of detection frame regions in the aerial view, each detection frame region corresponding to one item; and
detecting and identifying the edge contours of different parts of the item in the detection frame region.

3. The method for marking information of items in a refrigerator according to claim 2, wherein the searching the closed-loop contour line corresponding to a central region of a top surface of the item specifically comprises:
detecting and identifying a type of an outer contour of the item; and
selecting the closed-loop contour line corresponding to the central region of the top surface of the item according to the type of the outer contour of the item.

4. The method for marking information of items in a refrigerator according to claim 2, wherein the detecting and identifying a type of an outer contour of the item specifically comprises:
determining the type of the outer contour of the item according to a shape of the closed-loop contour line of the item, the items being classified into bottled items, canned items, boxed items and other items, the bottled item having a plurality of circular or oval closed-loop contour lines, the canned item having one circular or oval closed-loop contour line, and the boxed item having one or more quadrangle-like closed-loop contour line.

5. The method for marking information of items in a refrigerator according to claim 4, wherein the selecting the closed-loop contour line corresponding to the central region of the top surface of the item according to the type of the outer contour of the item specifically comprises:
determining that the item is a bottled item;
detecting and identifying the circular or oval closed-loop contour line in the detection frame region corresponding to the bottled item, and calculating a number of pixels in the closed-loop contour line; and
selecting a closed-loop contour line with the minimum number of internal pixels as the closed-loop contour line corresponding to a bottle cap region of the bottled item, and marking the item information at the central position in the closed-loop contour line.

6. The method for marking information of items in a refrigerator according to claim 4, wherein the selecting the closed-loop contour line corresponding to the central region of the top surface of the item according to the type of the outer contour of the item specifically comprises:
determining that the item is a canned item; and
detecting and identifying the circular or oval closed-loop contour line in the detection frame region corresponding to the canned item, and marking the corresponding item information at the central position in the closed-loop contour line.

7. The method for marking information of items in a refrigerator according to claim 4, wherein the selecting the closed-loop contour line corresponding to the central region of the top surface of the item according to the type of the outer contour of the item specifically comprises:
determining that the item is a boxed item;
detecting and identifying the quadrangle-like closed-loop contour line in the detection frame region corresponding to the boxed item, and calculating a number of pixels in the closed-loop contour line; and
selecting a closed-loop contour line with the maximum number of internal pixels as the closed-loop contour line corresponding to a central region of a top surface of the boxed item, and marking the corresponding item information at the central position in the closed-loop contour line.

8. The method for marking information of items in a refrigerator according to claim 4, wherein the selecting the closed-loop contour line corresponding to the central region of the top surface of the item according to the type of the outer contour of the item specifically comprises:
determining that the item belongs to other items; and
marking the corresponding item information at a central position of the detection frame region of the item.

9. A refrigerator, comprising: a plurality of bottle seats, a camera, a memory and a processor,
wherein the camera is provided above the bottle seats and is vertically downward;
the memory stores a computer program executable on the processor, and the processor executes the program to implement the steps of the method for marking information of items in a refrigerator according to any one of claims 1 to 8.

10. A computer storage medium, having a computer program stored therein, when the computer program runs, a device where the computer storage medium is located executing the steps of the method for marking information of items in a refrigerator according to any one of claims 1 to 8.
